# EUROPÄISCHE PATENTSCHRIFT

(11) **EP 2 447 485 B1**
(45) Veröffentlichungstag und Bekanntmachung des Hinweises auf die Patenterteilung: **15.03.2017**
(21) Anmeldenummer: 11187122.4
(22) Anmeldetag: 28.10.2011
(51) Int. Cl.: F01M 11/04

(54) **Sammelbehälter für Schmierstoff und Lageranordnung hiermit**
Container for lubricant and bearing assembly with same
Récipient de collecte pour lubrifiant et roulement en étant équipé

(30) Priorität: 01.11.2010 DE 202010014823 U
(43) Veröffentlichungstag der Anmeldung: 02.05.2012
(73) Patentinhaber: SKF Lubrication Systems Germany GmbH, 69190 Walldorf (DE)
(72) Erfinder: Paluncic, Zdravko, 67067 Ludwigshafen (DE); Schönfeld, Andreas, 68789 St. Leon-Rot (DE)
(74) Vertreter: Keil & Schaafhausen Patent- und Rechtsanwälte PartGmbB

(56) Entgegenhaltungen:
- WO-A1-2006/128936
- DE-U1-202010 013 614
- GB-A- 468 500
- US-A- 6 148 789
- US-A1- 2004 216 801

## Beschreibung

Die Erfindung betrifft einen Sammelbehälter für Schmierstoff mit einer Kartusche, die eine Einlassöffnung zum Einbringen von Schmierstoff und ein Entlüftungsöffnung aufweist. Darüber hinaus betrifft die Erfindung eine Lageranordnung mit einem derartigen Sammelbehälter.

In Schmiersystemen, die verschiedene Schmierstellen, bspw. Lager, mit Schmierstoff versorgen, wird überschüssiger oder verbrauchter Schmierstoff häufig aufgefangen und gesammelt. Aus der DE 20 2007 005 273 U1 ist bspw. eine Lageranordnung für eine Windkraftanlage bekannt, die mit einer Absaugeinrichtung für aus dem Lager austretendes Altfett ausgestattet ist.

Zum Auffangen des verbrauchten Schmierstoffs werden häufig Kunststoffflaschen eingesetzt, die mit dem Auslass eines Lagers abdichtend verbunden werden können. In diesen Kunststoffflaschen ist eine Entlüftungsbohrung vorgesehen, um ein Entweichen der in der Flasche befindlichen Luft nach außen zu ermöglichen, während sich die Flasche bspw. mit dem Altfett aus einem Lager füllt. In der Praxis hat es sich als nachteilig erwiesen, dass durch die Entlüftungsbohrung auch das Fett oder dergleichen Schmierstoff austreten kann. Ein vollständiges Auffangen des aus dem Lager austretenden Altfetts ist damit nicht sichergestellt. Zudem werden derartige Kunststoffflaschen nach der Verwendung meist verworfen, da ein Ausleeren des Altfetts aus den Flaschen nur mit großem Aufwand möglich ist.
In der EP 2 093 474 A2 wird ein besonders leichter Behälter zum Sammeln von Schmierstoff beschrieben, der durch einen innen mit einer Folie ausgekleideten Karton gebildet wird. Dieser ist in ähnlicher Weise wie die oben genannten Kunststoffflaschen einsetzbar.
In der Druckschrift US 6,148,789 A wird ein Akkumulator mit einem an einem Ende geschlossenen Zylinder offenbart, in dem Öl unter Druck gespeichert wird. In dem Zylinder wird ein Schwimmkörper gegen einen ansteigenden Druck verschoben, da der Zylinder durch ein Ventil in Form eines Autoventils verschlossen ist.
Auch in der Druckschrift US 2004/0216801 A1 wird ein geschlossener Behälter zur Aufnahme von Öl mit einer flexiblen Membran offenbart, in welchen das Öl nur gegen einen ansteigenden Druck eingebracht werden kann. Die luft- und fluiddichte Membran ist an einer unteren Kammer bzw. an einem unteren Abschnitt des Behälters angeordnet. Ferner ist eine obere Kammer bzw. sind obere Abschnitte vorgesehen. An der oberen Kammer bzw. am obersten Abschnitt ist ein Schaftventil vorgesehen, das zur Druckbeaufschlagung der oberen Kammer bzw. der oberen Abschnitte dient.
In Druckschrift GB 468,500 A wird ein Schmiermittelbehälter beschrieben, welcher einen Kolben aufweist. Hierbei wird das Schmiermittel mit Hilfe des Kolbens bei niedrigem Druck aus dem Reservoir in eine an der Basis der Vorrichtung angeordnete Auslassleitung abgeführt. Um den Schmiermittelbehälter mit Schmiermittel zu füllen, wird ein Deckel von dem Behälter gelöst und anschließend eine Schmiermittelkartusche von oben in den Behälter eingeführt und auf der Basis angeordnet. Dann wird ebenfalls von oben ein Pumpenkörper mit dem Kolben in die Kartusche eingeführt. Beim Herunterdrücken des Pumpenkörpers in Richtung der Basis entweicht die Luft durch eine Luftöffnung, welche sich neben dem Kolben befindet.

Aufgabe der vorliegenden Erfindung ist es demgegenüber, einen verbesserten Sammelbehälter für Schmierstoff bereitzustellen, der insbesondere für den Einsatz bei Großlagern geeignet ist.

Diese Aufgabe wird erfindungsgemäß im Wesentlichen mit einem Sammelbehälter für Schmierstoff mit den Merkmalen des Anspruchs 1 gelöst.

Bei dem erfindungsgemäßen Sammelbehälter kann in der Kartusche ein Dichtungselement vorgesehen sein, das eine Fluidverbindung zwischen der Einlassöffnung und der Entlüftungsöffnung abdichtend versperrt. Mit anderen Worten wird durch das Dichtungselement verhindert, dass bspw. Altfett oder dergleichen verbrauchter Schmierstoff, der über die Einlassöffnung in die Kartusche gelangt, durch die Entlüftungsöffnung entweichen kann. Um dennoch einen Druckausgleich zwischen dem Inneren der Kartusche und deren Umgebung zu ermöglichen, ist das Dichtungselement erfindungsgemäß bewegbar innerhalb der Kartusche angeordnet. Somit ist es möglich, dass verbrauchter Schmierstoff mit möglichst geringem Gegendruck in die Kartusche eingebracht werden kann, ohne dass die Gefahr besteht, dass der Schmierstoff durch die Entlüftungsöffnung aus der Kartusche entweichen kann.

Die Kartusche ist nach einer bevorzugten Ausführungsform der Erfindung ähnlich einer Flasche mit einem bspw. etwa zylindrischen Grundkörper, einem sich verjüngenden Halsbereich, in dem die Einlassöffnung ausgebildet ist ausgestattet. Hierbei wurde erfindungsgemäß auf den Boden der Kartusche vollständig verzichtet, so dass erfindungsgemäß das einseitig offene Ende der Kartusche die Entlüftungsöffnung bildet. Die Kartusche besteht vorzugsweise aus einem steifen, formstabilen Material, bspw. Kunststoff, das geeignet ist, das Eigengewicht der befüllten Kartusche zu tragen.

Nach einer ersten Ausführungsform der Erfindung ist das Dichtungselement ein Kolben, insbesondere ein Folgekolben, der innerhalb der Kartusche verschiebbar aufgenommen ist. In der Ausgangsposition, d.h. bei leerer Kartusche, befindet sich der Kolben auf der Seite der Einlassöffnung innerhalb der Kartusche. Durch den über die Einlassöffnung in die Kartusche eintretenden Schmierstoff wird der Kolben mit zunehmender Füllung der Kartusche von der Einlassöffnung weg verschoben. Da in der Kartusche vorhandene Luft über die Entlüftungsöffnung, die auf der dem Schmierstoff gegenüberliegenden Seite des Kolbens angeordnet ist, entweichen kann, ist der zum Befüllen der Kartusche erforderliche Schmierstoffdruck sehr gering.

In Weiterbildung dieses Erfindungsgedankens ist es vorgesehen, dass der Kolben derart innerhalb der Kartusche angeordnet ist, dass dieser durch eine Druckdifferenz zwischen der Einlassöffnung und der Entlüftungsöffnung von weniger als etwa 1 bar innerhalb der Kartusche verschiebbar ist. Der für die Kolbenbewegung erforderliche Druck des verbrauchten Schmierstoffes ist erfindungsgemäß möglichst klein, um einen unerwünschten Druckanstieg innerhalb des Lagers oder dergleichen Einrichtung eines Schmiersystems zu vermeiden. Vorzugsweise beträgt die Druckdifferenz weniger als etwa 0,75 bar, bspw. etwa zwischen 0,2 bar und etwa 0,5 bar.

Nach einer weiteren Ausführungsform der Erfindung ist das Dichtungselement als eine plastisch und/oder elastisch verformbare Membran ausgebildet. Diese Membran ist vorzugsweise innerhalb der Kartusche derart befestigt, dass Schmierstoff nicht von der Einlassöffnung zu der Entlüftungsöffnung gelangen kann. Die erfindungsgemäße Bewegbarkeit der Membran innerhalb der Kartusche kann dabei entweder durch eine elastische Verformung der Membran infolge des eintretenden Schmierstoffs erfolgen und/oder vorzugsweise durch eine plastische Verformung der Membran. Der Bewegbarkeit der Membran steht nicht entgegen, dass diese bereichsweise innerhalb der Kartusche fixiert sein kann. In diesem Fall ist nur ein Abschnitt, bspw. ein freies Ende, des Dichtungselements bewegbar innerhalb der Kartusche angeordnet.

Hierbei wird es bevorzugt, wenn die der Einlassöffnung bzw. dem verbrauchten Schmierstoff zugewandte Fläche der Membran größer ist als eine Querschnittsfläche der Kartusche in einem zwischen der Einlassöffnung und der Entlüftungsöffnung gelegenen Bereich der Kartusche. So ist es bspw. möglich, die Membran als einen in der Kartusche abdichtend fixierten Beutel auszubilden. Dieser kann im leeren Zustand der Kartusche in Richtung zu der Einlassöffnung gewölbt oder ausgestülpt sein durch den eintretenden Schmierstoff in Richtung zu der Entlüftungsöffnung bzw. einem offenen Ende der Kartusche bewegt bzw. verformt werden.

Auch in Bezug auf die Membran wird es bevorzugt, wenn die Druckdifferenz zwischen der Einlassöffnung und der Entlüftungsöffnung, die für die Bewegung der Membran innerhalb der Kartusche erforderlich ist, besonders gering gehalten werden kann, insbesondere weniger als etwa 0,5 bar, vorzugsweise weniger als etwa 0,25 bar.

Den beiden erfindungsgemäßen Ausführungsformen ist es gemeinsam, dass insbesondere bei der Verwendung eines Kolbens als Dichtungselement auch eine Entleerung des Sammelbehälters mit geringem Aufwand möglich ist. Auf diese Weise ist der erfindungsgemäße Sammelbehälter im Gegensatz zu herkömmlichen Lösungen wiederverwendbar. Zudem kann auch das Altfett oder dergleichen verbrauchter Schmierstoff leichter einer Wiederverwendung oder weiteren Nutzung zugeführt werden.

Nach einem weiteren Aspekt der Erfindung ist die Einlassöffnung der Kartusche mit einem Adapter zur lösbaren Anbindung an einen Schmierstoffauslass versehen. Der Sammelbehälter kann somit mit geringem Aufwand über den Adapter und ggf. eine Winkel- oder Gerade-Verschraubung an einen Lagerauslass oder dergleichen angeschlossen werden. Auch das Auswechseln des Sammelbehälters wird hierdurch erleichtert.

Die Erfindung betrifft weiter eine Lageranordnung mit einem Wälzlager oder einem Gleitlager und einem mit diesem Lager verbundenen Schmiersystem. Das Schmiersystem ist mit einer Einrichtung zur Zufuhr von Schmierstoff in das Lager sowie einem Schmierstoffauslass zum Abführen von Schmierstoff aus dem Lager versehen. Der Schmierstoffauslass steht dabei erfindungsgemäß mit einem Sammelbehälter der oben genannten Art in Verbindung, um aus dem Lager austretenden Schmierstoff in dem Sammelbehälter aufzufangen.

Vorzugsweise handelt es sich bei dem Lager um ein Großlager, wie es bspw. in Windkraftanlagen eingesetzt wird. Derartige Lager bestehen aus einem Außenring, einem Innenring und dazwischen angeordneten Wälzkörpern, wobei in den Innenring und/oder in den Außenring Elemente des Schmiersystems zur Zufuhr von Schmierstoff und zum Absaugen bzw. Ableiten von Schmierstoff integriert sein können.

Die Erfindung wird nachfolgend anhand von Ausführungsbeispielen und unter Bezugnahme auf die Zeichnungen näher erläutert.

Es zeigen schematisch:
- Fig.1: einen Sammelbehälter nach einer ersten Ausführungsform der Erfindung im leeren Zustand,
- Fig. 2: den Sammelbehälter nach Fig. 1 im teilweise befüllten Zustand,
- Fig. 3: einen Sammelbehälter nach einer weiteren Ausführungsform im leeren Zustand und
- Fig. 4: den Sammelbehälter nach Fig. 3 im teilweise befüllten Zustand.

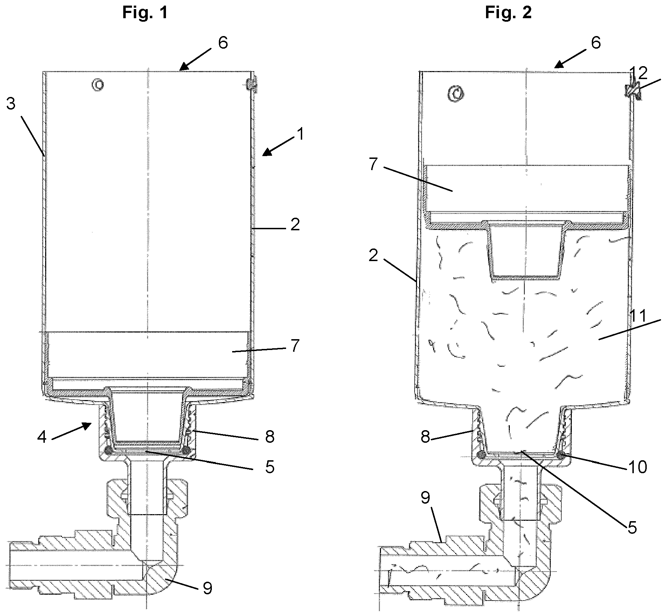

Der in den Figuren dargestellte Sammelbehälter 1 ist im Wesentlichen durch eine flaschenartige Kartusche 2 und ein darin aufgenommenes Dichtungselement gebildet. Die Kartusche 2 besitzt einen zylindrischen Grundkörper 3 und bspw. einen gegenüber dem Grundkörper 3 verjüngten Hals 4 in dem eine Einlassöffnung 5 vorgesehen ist. Das der Einlassöffnung 5 gegenüberliegende Ende des Grundkörpers 3 ist in der Ausführungsform der Figuren 1 und 2 nicht verschlossen und bildet somit eine Entlüftungsöffnung 6.

Das Dichtungselement ist in der Ausführungsform der Figuren 1 und 2 als ein (Folge-)Kolben 7 ausgebildet, der innerhalb der Kartusche 2 verschiebbar aufgenommen ist. Wie auch aus der Darstellung der Figur 2 ersichtlich ist, weist der Kolben 7 einen abdichtend an der Innenwand des Grundkörpers 3 geführten Bereich auf sowie einen zumindest näherungsweise an die Kontur des verjüngten Halses 4 angepassten, der Einlassöffnung 5 zugewandten Bereich. Damit verbleibt in der in Figur 1 gezeigten Position des Kolbens 7, in welcher die Kartusche 2 leer ist, nahezu kein Totvolumen innerhalb der Kartusche 2.

Die Einlassöffnung 5 ist über einen Adapter 8 abgedichtet mit einem Schmierstoffauslass 9 eines nicht näher dargestellten Schmiersystems verbunden. Der Schmierstoffauslass 9 ist in der in Figur 1 gezeigten Ausführungsform als eine Winkelverschraubung ausgebildet. Alternativ sind auch anders ausgebildete Schmierstoffauslässe, bspw. eine gerade Verschraubung als Schmierstoffauslass möglich. Zur Abdichtung der Kartusche 2 innerhalb des Adapters 8 kann ein Dichtring 10 in dem Adapter 8 vorgesehen sein.

Wenn der Sammelbehälter 1 bspw. als Bestandteil eines Schmiersystems mit einer Lageranordnung oder dergleichen verbunden ist, strömt im Betrieb überschüssiger bzw. verbrauchter Schmierstoff über den Schmierstoffauslass 9 in die Einlassöffnung 5 der Kartusche 2. Durch den in die Kartusche 2 eintretenden Schmierstoff wird der Kolben 7 in Figur 1 nach oben verschoben. Figur 2 zeigt die teilweise mit Schmierstoff 11 befüllte Kartusche 2, bei welcher der Kolben 7 aus seiner in Figur 1 gezeigten Position verschoben wurde.

Da zum Befüllen der Kartusche 2 lediglich die Reibungskräfte des Kolbens 7 innerhalb der Kartusche 2 überwunden werden müssen, ist es möglich, auch bei einem sehr geringen Druck des Schmierstoffs 11, bspw. etwa 0,2 bis etwa 0,3 bar, die Kartusche 2 zu füllen. Ein Herausfallen des Kolbens 7 aus der Kartusche 2 kann durch einen Stopfen 12 verhindert werden, der in der Nähe der Entlüftungsöffnung 6 innerhalb des Grundkörpers 3 angeordnet ist.

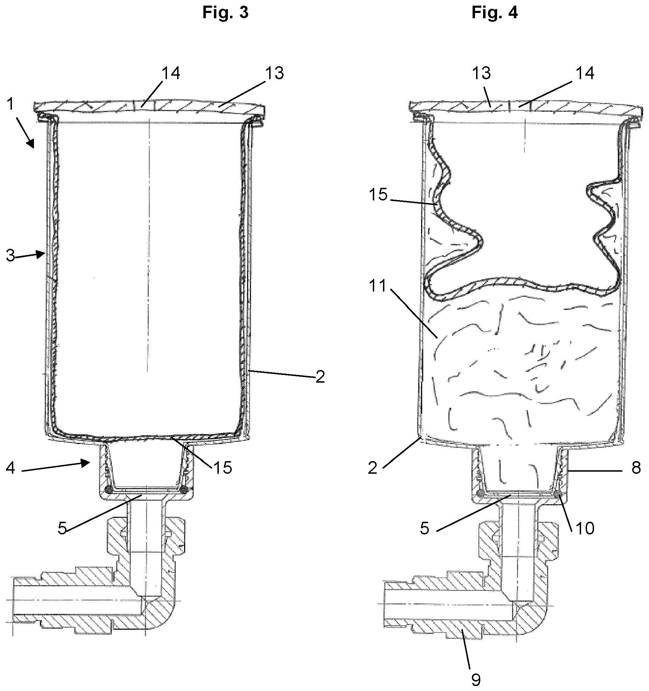

Eine andere Ausführungsform ist in den Figuren 3 und 4 dargestellt. Der Aufbau der Kartusche 2 entspricht dabei im Wesentlichen dem unter Bezugnahme auf die Figuren 1 und 2 erläutertem Aufbau.

Die Kartusche 2 ist jedoch auf ihrer der Einlassöffnung 5 abgewandten Seite durch einen Boden 13 verschlossen, in welchem eine Entlüftungsöffnung 14 vorgesehen ist. Weiter ist statt des Kolbens 7 in der Kartusche 2 eine Membran 15 vorgesehen, die in der dargestellten Ausführungsform als ein Kunststoffbeutel ausgebildet ist. Die der Einlassöffnung 5 bzw. dem durch diese eintretenden Schmierstoff zugewandte Fläche der Membran 15 ist dabei deutlich größer als der Querschnitt des Grundkörpers 3 der Kartusche 2.

Abweichend von der Darstellung der Figur 3 kann sich die Membran 15 in dem leeren Zustand der Kartusche bis in den Halsbereich 4 in die Nähe der Einlassöffnung 5 erstrecken. Die Membran 15 besteht vorzugsweise aus einem zwar für Schmierstoff undurchlässigen, aber leicht innerhalb der Kartusche 2 verformbaren Material. Auf diese Weise ist es möglich, dass der in die Kartusche 2 eindringende Schmierstoff 11 ohne nennenswerten Gegendruck die Membran 15 innerhalb der Kartusche bewegt, d.h. den Kunststoffbeutel innerhalb der Kartusche 2 komprimiert. Hierbei kann die zwischen der Membran 15 und dem Boden 13 vorhandene Luft über die Entlüftungsöffnung 14 aus der Kartusche 2 entweichen.

Es wird bevorzugt, wenn die Membran 15 fest mit der Kartusche 2 verbunden ist. Dies kann bspw. über eine Verschweißung der Membran 15 im entlüftungsseitigen Randbereich des Grundkörpers 3 erfolgen. Alternativ ist es auch möglich, die Membran 15 bspw. durch den Boden 13 innerhalb der Kartusche 2 abdichtend festzuklemmen. Weiter ist auch eine Befestigung der Membran 15 an anderen Positionen innerhalb der Kartusche möglich, solange hierdurch eine Fluidverbindung zwischen der Einlassöffnung 5 und der Entlüftungsöffnung 14 unterbunden wird.

### Bezugszeichenliste

- 1: Sammelbehälter
- 2: Kartusche
- 3: Grundkörper
- 4: Hals
- 5: Einlassöffnung
- 6: Entlüftungsöffnung
- 7: Kolben
- 8: Adapter
- 9: Schmierstoffauslass
- 10: Dichtring
- 11: Schmierstoff
- 12: Stopfen
- 13: Boden
- 14: Entlüftungsöffnung
- 15: Membran (Kunststoffbeutel)

## Patentansprüche

1. Sammelbehälter für Schmierstoff mit einer Kartusche (2), die eine Einlassöffnung (5) zum Einbringen von Schmierstoff und eine Entlüftungsöffnung (6) aufweist, wobei in der Kartusche (2) ein Dichtungselement (7) bewegbar angeordnet vorgesehen ist, **dadurch gekennzeichnet, dass** das Dichtungselement (7) eine Fluidverbindung zwischen der Einlassöffnung (5) und der Entlüftungsöffnung (6) abdichtend versperrt, wobei die Kartusche (2) ähnlich einer Flasche mit einem zylindrischen Grundkörper (3) und einem verjüngten Halsbereich (4) ausgebildet ist, in welchem die Einlassöffnung (5) vorgesehen ist, wobei das dem verjüngten Halsbereich (4) gegenüber liegende Ende der Kartusche (2) einseitig offen ausgebildet ist und die Entlüftungsöffnung (6) bildet.

2. Sammelbehälter nach Anspruch 1, **dadurch gekennzeichnet, dass** das Dichtungselement ein (Folge-)Kolben (7) ist, der innerhalb der Kartusche (2) verschiebbar ist.

3. Sammelbehälter nach Anspruch 2, **dadurch gekennzeichnet, dass** der Kolben (7) derart innerhalb der Kartusche (2) angeordnet ist, dass der Kolben (7) durch eine Druckdifferenz zwischen der Einlassöffnung (5) und der Entlüftungsöffnung (6) von weniger als 1 bar, insbesondere weniger als 0,75 bar, besonders bevorzugt zwischen etwa 0,2 bar und etwa 0,5 bar, innerhalb der Kartusche (2) verschiebbar ist.

4. Sammelbehälter nach Anspruch 1, **dadurch gekennzeichnet, dass** ein Stopfen (12) vorgesehen ist, welcher das Herausfallen des Kolbens (7) aus der Kartusche (2) verhindert.

5. Sammelbehälter nach Anspruch 4, **dadurch gekennzeichnet, dass** der Stopfen (12) in der Nähe der Entlüftungsöffnung (6) innerhalb des Grundkörpers (3) angeordnet ist.

6. Sammelbehälter nach Anspruch 1, **dadurch gekennzeichnet, dass** das Dichtungselement eine plastisch und/oder elastisch verformbare Membran ist.

7. Sammelbehälter nach Anspruch 6, **dadurch gekennzeichnet, dass** die der Einlassöffnung (5) zugewandte Fläche der Membran größer ist als die Querschnittsfläche der Kartusche (2) in einem zwischen der Einlassöffnung (5) und der Entlüftungsöffnung (6) gelegenen Bereich der Kartusche (2).

8. Sammelbehälter nach Anspruch 6 oder 7, **dadurch gekennzeichnet, dass** die Membran als ein in der Kartusche (2) abdichtend fixierter Beutel ausgebildet ist.

9. Sammelbehälter nach einem der Ansprüche 6 bis 8, **dadurch gekennzeichnet, dass** die Membran durch eine Druckdifferenz zwischen der Einlassöffnung (5) und der Entlüftungsöffnung (6) von weniger als 0,5 bar innerhalb der Kartusche (2) bewegbar ist.

10. Sammelbehälter nach einem der Ansprüche 1 bis 3 und 6 bis 9, **dadurch gekennzeichnet, dass** die Einlassöffnung (5) der Kartusche (2) mit einem Adapter (8) zur lösbaren Anbindung an einen Schmierstoffauslass (9) versehen ist.

11. Lageranordnung mit einem Wälzlager und einem mit diesem verbundenen Schmiersystem, das eine Einrichtung zur Zufuhr von Schmierstoff in das Wälzlager und einen Schmierstoffauslass (9) zum Abführen von Schmierstoff aus dem Wälzlager aufweist, wobei der Schmierstoffauslass (9) mit einem Sammelbehälter (1) nach einem der vorhergehenden Ansprüche verbunden ist.

## Claims

1. A collection container for lubricant, having a cartridge (2), which has an inlet opening (5) for introducing lubricant and a vent opening (6), a seal element (7), which is arranged in a movable manner, being provided in the cartridge (2),
**characterised in that**
the seal element (7) blocks a fluid connection between the inlet opening (5) and the vent opening (6) in a sealing manner, wherein the cartridge (2) is formed in a bottle-like manner with a cylindrical main body (3) and a tapered neck region (4), in which the inlet opening (5) is provided, wherein the end of the cartridge (2) opposite the tapered neck region (4) is open on one side and forms the vent opening (6).

2. The collection container according to Claim 1,
**characterised in that**
the seal element is a (following) plunger (7) that can be displaced inside the cartridge (2).

3. The collection container according to Claim 2,
**characterised in that**
the plunger (7) is arranged inside the cartridge (2) in such a manner that the plunger (7) can be displaced inside the cartridge (2) by a pressure difference between the inlet opening (5) and the vent opening (6) of less than 1 bar, in particular less than 0.75 bar, particularly preferably between approximately 0.2 bar and approximately 0.5 bar.

4. The collection container according to Claim 1,
**characterised in that**
a stopper (12) is provided, which prevents the plunger (7) falling out of the cartridge (2).

5. The collection container according to Claim 4,
**characterised in that**
the stopper (12) is arranged inside the main body (3) in the vicinity of the vent opening (6).

6. The collection container according to Claim 1,
**characterised in that**
the seal element is a plastically and/or elastically deformable membrane.

7. The collection container according to Claim 6,
**characterised in that**
the face of the membrane facing the inlet opening (5) is larger than the cross-sectional area of the cartridge (2) in a region of the cartridge (2) between the inlet opening (5) and the vent opening (6).

8. The collection container according to Claim 6 or 7,
**characterised in that**
the membrane is in the form of a bag fixed in a sealing manner in the cartridge (2).

9. The collection container according to any one of Claims 6 to 8,
**characterised in that**
the membrane can be moved inside the cartridge (2) by a pressure difference between the inlet opening (5) and the vent opening (6) of less than 0.5 bar.

10. The collection container according to any one of Claims 1 to 3 and 6 to 9,
**characterised in that**
the inlet opening (5) of the cartridge (2) is provided with an adapter (8) for detachable connection to a lubricant outlet (9).

11. A bearing arrangement having a rolling bearing and a lubrication system connected thereto, said system having a device for supplying lubricant into the rolling bearing and a lubricant outlet (9) for discharging lubricant out of the rolling bearing, wherein the lubricant outlet (9) is connected to a collection container (1) according to any one of the preceding claims.

## Revendications

1. Récipient collecteur pour du lubrifiant comprenant une cartouche (2) qui présente une ouverture d'admission (5) pour introduire du lubrifiant et une ouverture d'aération (6), dans lequel un élément d'étanchéité (7) est prévu disposé mobile dans la cartouche (2), **caractérisé en ce que** l'élément d'étanchéité (7) bloque en étanchéité une liaison fluidique entre l'ouverture d'admission (5) et l'ouverture d'aération (6), dans lequel la cartouche (2) est formée de façon similaire à une bouteille avec un corps de base cylindrique (3) et un col (4) rétréci, dans lequel l'ouverture d'admission (5) est prévue, dans lequel l'extrémité de la cartouche (2) face au col rétréci (4) est formée ouverte d'un côté et forme l'ouverture d'aération (6).

2. Récipient collecteur selon la revendication 1, **caractérisé en ce que** l'élément d'étanchéité est un piston (asservi) (7) qui est mobile à l'intérieur de la cartouche (2).

3. Récipient collecteur selon la revendication 2, **caractérisé en ce que** le piston (7) est ainsi disposé à l'intérieur de la cartouche (2) que le piston (7) est mobile à l'intérieur de la cartouche (2) par une différence de pression entre l'ouverture d'admission (5) et l'ouverture d'aération (6) de moins de 1 bar, en particulier de moins de 0,75 bar, particulièrement de préférence entre environ 0,2 bar et environ 0,5 bar.

4. Récipient collecteur selon la revendication 1, **caractérisé en ce qu'**un bouchon (12) est prévu, lequel empêche que le piston (7) ne tombe hors de la cartouche (2).

5. Récipient collecteur selon la revendication 4, **caractérisé en ce que** le bouchon (12) est disposé à proximité de l'ouverture d'aération (6) à l'intérieur du corps de base (3).

6. Récipient collecteur selon la revendication 1, **caractérisé en ce que** l'élément d'étanchéité est une membrane plastiquement et/ou élastiquement déformable.

7. Récipient collecteur selon la revendication 6, **caractérisé en ce que** la surface de la membrane tournée vers l'ouverture d'admission (5) est plus grande que la surface transversale de la cartouche (2) dans une zone de la cartouche (2) située entre l'ouverture d'admission (5) et l'ouverture d'aération (6).

8. Récipient collecteur selon la revendication 6 ou 7, **caractérisé en ce que** la membrane est formée en tant qu'un sachet fixé de manière étanche dans la cartouche (2).

9. Récipient collecteur selon l'une des revendications 6 à 8, **caractérisé en ce que** la membrane est mobile à l'intérieur de la cartouche (2) par une différence de pression entre l'ouverture d'admission (5) et l'ouverture d'aération (6) de moins de 0,5 bar.

10. Récipient collecteur selon l'une des revendications 1 à 3 et 6 à 9, **caractérisé en ce que** l'ouverture d'admission (5) de la cartouche (2) est dotée d'un adaptateur (8) pour être rattachée de façon séparable à une sortie de lubrifiant (9).

11. Agencement de palier comprenant un palier à rouleau et un système de lubrifiant relié à celui-ci qui présente un dispositif pour amener du lubrifiant dans le palier à rouleau et une sortie de lubrifiant (9) pour évacuer le lubrifiant hors du palier à rouleau, dans lequel la sortie de lubrifiant (9) est reliée à un récipient collecteur (1) selon l'une des revendications précédentes.
